# EUROPEAN PATENT APPLICATION

(11) **EP 2 731 308 A1**
(43) Date of publication of application: **14.05.2014**
(21) Application number: 12306392.7
(22) Date of filing: 09.11.2012
(51) Int. Cl.: H04L 29/06

(54) **Method to generate a confidential user token**

(71) Applicant: Gemalto SA, 92190 Meudon (FR)
(72) Inventor: Lu, HongQian Karen, 13705 LA CIOTAT (FR); Castillo, Laurent, 13705 LA CIOTAT (FR); Smadja, Philippe, 13705 LA CIOTAT (FR)

(57) **Abstract**

The present invention relates to a method to manage the access to a service (SS) provided by a first server (SP) by a user having a device (USR) connected to the first server (SP), said first server (SP) redirecting to a second server (IdP) for obtaining credentials of the user, said method enabling the first server (SP) to be automatically called back in such a way the second server (IdP) does not have knowledge of first server (SP).

## Description

### FIELD OF THE INVENTION

The present invention relates to a method to generate a user token while protecting the user privacy. More precisely, the invention concerns the privacy of a user in a three actors' authentication: the user, a first server that is the token consumer (that is generally a service-provider) and a second server that is the token builder (that is generally an identity-provider).

In practice the invention provides privacy to a user in relation with a service-provider (SP) and with an identity-provider (IdP) while the user attempts to access to a service requesting a specific verification concerning the user. Such verification classically implies the intervention of an identity-provider. The aim of the invention is to avoid sending the reference of the service-provider to the identity-provider.

The invention also pertains to a browser's plug-in dedicated to implement the method.

### BACKGROUND OF THE INVENTION

The ever increasing number of passwords across websites leads identity-providers to enable cross-domain collaborations. Besides, the security of the identity management is still a major issue as well as the convenience for the users. These goals are often achieved at the cost of users' privacy. Indeed, main part of the time, identity-providers are able to track the users' behaviors: visited websites, access times, performed actions. Internet identity-providers can use this information to monetize identity and to build their offers. Thus personal information is often unnecessarily disclosed to service-providers without users' awareness.

Typically a user wants to access a service-provider over the Internet. The SP requests the user to present some credential issued by a trusted credential issuer or called an identity-provider IdP. If the user already has the credential, he/she can present the credential with selective disclosure and other privacy protection features. If the user does not have the credential, he needs to get it somehow and, for seamless user experience, the SP would direct the user to get the credential dynamically and come back to the SP.

In such situations, a service-provider should call an identity-provider that will generally authenticate the user with appropriate mean, build an authentication token and send it back to the service-provider.

To send back the token to the service-provider, the identity-provider should redirect it to the service-provider URL. In case the solution relies only on web browser and requires seamless user friendly return back to the SP the identity-provider needs to have knowledge of the service-provider URL to be able to automatically send back the user token.

The existing identity federation protocols provide security and nice user experience but defeats the purpose of the privacy-preserving credential. Indeed, with known browser based solutions, the IdP can learn which SP the user came from.

In a privacy solution, it is needed that the identity-provider does not know the service-provider referrer. For instance, suppose an identity-provider is able to generate a token saying and signing "this user is above 18 years and is a French citizen" for service-provider. The service-provider is for instance an online voting system using this information to allow voting. In a privacy solution, the identity-provider should, of course, not know what the user votes, this feature being out of scope, but even not know that the user votes, i.e. generically that he wants to access a specific SP, which falls under the scope of the invention.

Cryptography based privacy-preserving credential systems, such as Microsoft's U-Prove and IBM's Identity Mixer (Idemix), enable authentication and access control while ensuring users' privacy. The linkage of the issuance and usage of credentials is not possible and the credentials contain selective information. Using a U-Prove Agent enables to solve the above mentioned privacy problem.

A U-Prove Agent provides a mechanism to separate the retrieving of information from identity providing trusted organizations from the release of this information to the destination website. The underlying U-Prove cryptography prevents the IdP from tracking where or when the user uses the retrieved information. The U-Prove Agent is composed of a cloud-hosted service and optional client components. Together with the client components, the Agent acts on the user's behalf to interact with the IdP to generate a U-Prove token and to compute a presentation proof and send a presentation token to the service-provider.

With such an agent, the users' behavior cannot be tracked even if identity-provider and service-provider share their data. Nevertheless, the integration of such technologies is still a challenge. Furthermore a problem with this approach is that the U-Prove Agent that is cloud-hosted knows it all precisely. It can track, in fact, which service-provider the user has used his/her credential at what time, with what credential, issued by which issuer, and so on. This, in some aspect, defeats the purpose of the privacy-preserving credential.

There is a need for a trustable, simple and easy method to protect the user's privacy in its relation with a service-provider and an identity-provider.

### SUMMARY OF THE INVENTION

The present invention aims at providing such a method hiding the service-provider referrer to an identity-provider and, at same time, being able to return the user token to the service-provider while not encountering the drawbacks and defaults of the prior art solutions.

To achieve these purposes, the invention relates to a method to implement seamless privacy compliant redirection to SP, using a local browser. Such redirection shall transport the user token in a privacy compliant manner. Said method further enables the concerned service-provider remaining unknown from the identity-provider. The invention thus relates to a method to manage the access to a service provided by a first server by a user having a device connected to the first server, said first server redirecting to a second server for obtaining credentials of the user, said method enabling the first server to be automatically called back in such a way the second server does not have knowledge of first server, said method comprising the following steps:
a/ for the first server, requesting the availability or the installation of a browser plug-in dedicated to privacy redirection called privacy redirect plug-in,
b/ for the privacy redirect plug-in, securely storing the first server URL called return-URL to call back the first server,
c/ for the privacy redirect plug-in, calling the second server to send a credential request, said credential request devoid of the first server URL,
d/ for the second server, interacting with the user to determine credentials,
e/ for the second server, sending credentials or information enabling to retrieve credentials to the privacy plug-in,
f/ for the privacy redirect plug-in, calling back the stored return URL with received credentials or retrieval information.
g/ for the first server, receiving credentials or retrieving them using retrieval information and giving access to the service.

With such a method, the privacy is locally addressed by the local plug-in installed by the user himself/herself. This solution is convivial for the user and the local implementation of the solution favors the trust. Functionalities of the plug-in enable a total separation of the identity data creation and of the service-provider URL.

According to a particular embodiment, step d/ is such that it includes a step, for the identity-provider, to send a request to the privacy redirect plug-in to call the stored service-provider return-URL.

Such a call, even if generated under request of the identity-provider, is processed by the plug-in only. This last keeps the service-provider URL unknown from the identity-provider.

In a preferred embodiment, the method includes a preliminary step, for the first server, of opening a new window in the browser displaying an IdP user interface as result of the call of the second server with no first server reference, said new window being called the second server window.

This embodiment enables the user to follow and control the successive steps of the method of the invention. The user experience is thus optimal while his/her privacy is preserved.

Advantageously, the second server window is closed after the stored return-URL has been called by the privacy redirect plug-in. This closing is preferably automatic.

This feature enables a seamless experience for the user.

The present invention also relates to a browser's plug-in dedicated to implement the steps realized by the privacy redirect plug-in in the method according to the invention.

Such a browser plug-in will be developed for each environment with the functionalities of the invention in order to enable the user to control and assure his/her privacy.

To the accomplishment of the foregoing and related ends, one or more embodiments comprise the features hereinafter fully described and particularly pointed out in the claims.

### BRIEF DESCRIPTION OF THE DRAWINGS

Other advantages and novel features will become apparent from the following detailed description when considered in conjunction with the appended drawings, wherein:
- Figure 1 represents an environment of the type to which the present invention is applied;
- Figure 2 shows a flowchart of the method of the invention.

### DETAILED DESCRIPTION OF EMBODIMENTS OF THE INVENTION

In the following detailed description, reference is made to the accompanying drawings that show, by way of illustration, specific embodiments in which the invention may be practiced. These embodiments are described in sufficient detail to enable those skilled in the art to practice the invention. The following description and the annexed drawing set forth in detail certain illustrative aspects and are indicative of but a few of the various ways in which the principles of the invention may be employed. Thus the following detailed description is not to be taken in a limiting sense, and the scope of the present invention is defined only by the appended claims, appropriately interpreted, along with the full range of equivalents to which the claims are entitled. For clarity, only those elements and steps which are useful to the understanding of the present invention have been shown in the drawings and will be described.

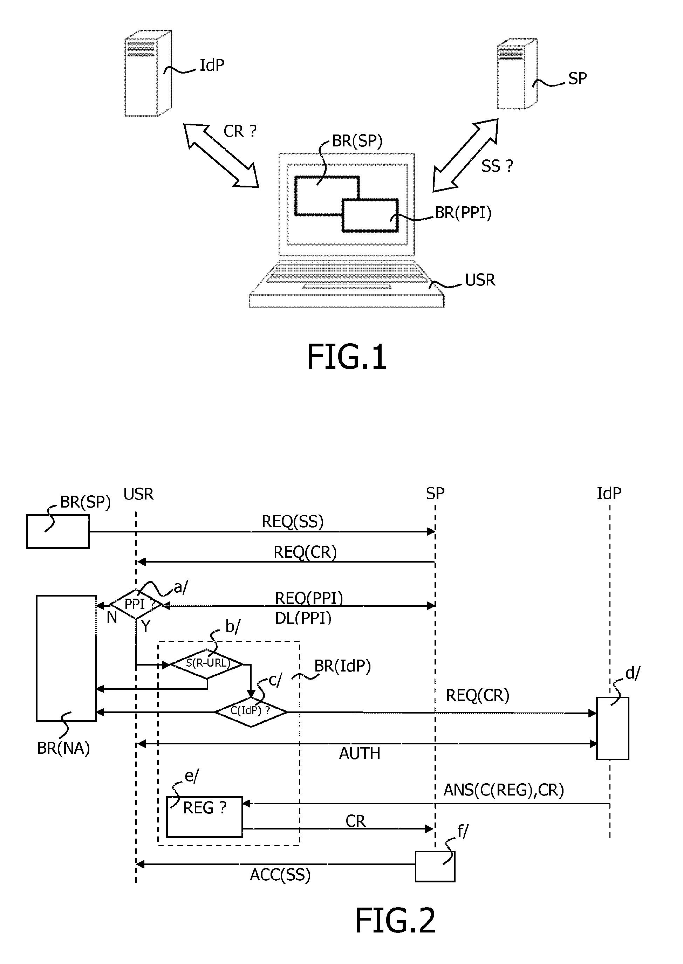

Figure 1 shows an environment of the type to which the invention applies. It consists in a three actors' authentication wherein a user needs to authenticate from a device USR to access a secure web service SS provided by a service-provider SP. For this purpose the user needs credentials that an identity-provider IdP is dedicated to provide. These credentials are indeed requested by the service-provider SP to permit the user to access the secure web service SS. For security, all communications over the Internet could use SSL/TLS but it is out-of-scope the invention.

Figure 2 is a flowchart of the method of the invention. At the beginning, a user opens a service-provider window BR(SP) to visit a service-provider website through a browser installed in the device USR.

The downloaded code corresponding to the window BR(SP) comprises a request REQ(SS) to access to a secure service SS of the service provider SP.

According to the invention, the service-provider SP requests the availability or installation of a privacy redirect plug-in PPI in a step a/. Indeed, if the privacy plug-in PPI is not available, the service-provider SP further requests its installation REQ (PPI) and its downloading DL (PPI).

If the privacy plug-in PPI is not available and cannot be installed for any reason (case N), typically, a non-access message is displayed in a dedicated window BR (NA). The access to the secure service is thus denied.

Otherwise (case Y), the service provider SP may open a new window BR(IdP). If the SP does not open the new window, the SP windows becomes the BR(IdP) windows. Window BR(IdP) is thus represented in dotted line. In the downloaded code, it is requested that the privacy plug-in PPI store S(R-URL) a return URL R-URL in memory indexed by REG in a step b/. This return R-URL corresponds to the service provider SP URL.

Then, in a step c/, the SP downloaded code calls (C(IdP)) the IdP via a request REQ(CR) to access credentials. According to the invention, the request REQ(CR) does not include any reference to the return-URL. When needed, the plug-in PPI will automatically retrieve the R-URL related to the SP in memory indexed by the register REG.

Advantageously the window BR(IdP) may explain the way for work to the user. For instance, the user is asked if he/she wants the return-URL to be stored and then if he/she wants the identity provider to be contacted. This feature may be interesting as the user controls the different steps of the privacy method.

The identity-provider IdP completes the user authentication and prepares data in a step d/. Then it sends an answer ANS(C(REG),CR). This answer can comprise credentials and can be sent to the privacy plug-in PPI. Such an answer comprising credentials can also be sent to a local entity, for instance a smart card connected to the user device USR that will store the credentials in order to enable the service provider SP to retrieve them. In variant, the answer will only include information enabling the credentials to be retrieved by the service provider SP, said information being privacy compliant.

Said information may correspond to a storing address on a smart card or correspond to credentials creation means stored on a smart card. For instance, the address can be a type of credential, for instance a MERA credential. Implicitly, the service provider SP called by the privacy plug-in PPI with such an information will implicitly retrieve the CR in the smart card, no further data are required.

The answer ANS(C(REG),CR) includes a command C(REG) to call the address in memory indexed by register REG.

Thus, in a step e/, the privacy plug-in PPI retrieves the return-URL R-URL stored in memory indexed by REG and calls the R-URL with the credentials CR if received from the identity provider IdP or with the received information compliant with the privacy to enable the service provider SP to retrieve the credentials CR.

At last, in a step f/, the service-provider SP checks the credential CR or retrieve the CR in privacy compliant manner and replies by giving access ACC(SS) to the secure service SS. If a dedicated window BR(IdP) was opened, this window is automatically and silently closed by the privacy plug-in PPI.

The invention enables dynamic issuing of privacy-preserving credentials, separates service-providers from the credential issuer and provides a nice user experience.

The invention offers privacy as credential issuance and consumptions are separated by the privacy plug-in so that IdP does not know where the issuance request initiated from, and where the credentials are used.

With the invention, privacy is offered to the user as soon as he/she has installed the privacy plug-in corresponding to his/her web browser. The plug-in thus needs to be developed for the different browsers, OS's and platforms.

## Claims

1. Method to manage the access to a service (SS) provided by a first server (SP) by a user having a device (USR) connected to the first server (SP), said first server (SP) redirecting to a second server (IdP) for obtaining credentials of the user, said method enabling the first server (SP) to be automatically called back in such a way the second server (IdP) does not have knowledge of first server (SP), said method comprising the following steps:
a/ for the first server (SP), requesting (REQ(PPI)) the availability or the installation of a browser plug-in dedicated to privacy redirection called privacy redirect plug-in (PPI),
b/ for the privacy redirect plug-in (PPI), securely storing (S(R-URL)) the first server URL called return-URL (R-URL) to call back the first server (SP),
c/ for the privacy redirect plug-in (PPI), calling (C(IdP)) the second server (IdP) to send a credential request (REQ(CR)), said credential request (REQ(CR)) devoid of the first server URL (R-URL),
d/ for the second server (IdP), interacting with the user to determine credentials (CR),
e/ for the second server (IdP), sending credentials or information enabling to retrieve credentials to the privacy plug-in (PPI),
f/ for the privacy redirect plug-in (PPI), calling back the stored return URL (R-URL) with received credentials (CR) or retrieval information.
g/ for the first server, receiving credentials or retrieving them using retrieval information and giving access to the service (SS).

2. Method according to claim 1, wherein step d/ is such that it includes a step, for the second server (IdP), to send a request (C(REG)) to the privacy redirect plug-in (PPI) to call the stored return-URL (R-URL).

3. Method according to any of preceding claims, including a preliminary step, for the first server (SP), of opening a new window (BR(IdP)) in the browser displaying an IdP user interface as result of the call (C(IdP)) of the second server (IdP) with no first server reference, said new window being called the second server window.

4. Method according to claim 3, wherein the second server window (BR(IdP)) is closed after the stored return-URL (R-URL) has been called by the privacy redirect plug-in (PPI).

5. Method according the claim 4, wherein the closing of the second server window (BR(IdP)) is automatic.

6. A browser's plug-in dedicated to implement the steps realized by the privacy redirect plug-in in the method according to one of preceding claims.
